# FASCICULE DE BREVET EUROPEEN

(11) **EP 2 357 061 B1**
(45) Date de publication et mention de la délivrance du brevet: **04.04.2018**
(21) Numéro de dépôt: 11154160.3
(22) Date de dépôt: 11.02.2011
(51) Int. Cl.: B25B 27/06, B23P 11/02

(54) **Procédé de démontage d'une bague fermement ajustée dans un alésage**
Verfahren zum Ausziehen eines in einer Bohrung mittels einer Presspassung festgelegten Rings
Method for pulling out a ring which is seated with an interference fit in a bore

(30) Priorité: 15.02.2010 FR 1051033
(43) Date de publication de la demande: 17.08.2011
(73) Titulaire: AIRBUS OPERATIONS (S.A.S), 31060 Toulouse (FR)
(72) Inventeur: Caraoue, Frédéric, 31170 Tournefeuille (FR)
(74) Mandataire: Gicquel, Olivier Yves Gérard

(56) Documents cités:
- DE-A1- 3 907 528
- US-A- 1 980 156

## Description

La présente invention s'inscrit dans le domaine du démontage d'une bague montée fermement ajustée dans un alésage formé dans une pièce support. Elle concerne un procédé pour un tel démontage. Un procédé de démontage d'une bague montée fermement ajustée dans un alésage dans une pièce support est par exemple connu du document US 1 980 156 A. L'invention trouve plus particulièrement application pour le démontage des bagues, ou frettes, qui ont été montées dans un alésage suivant la technique dite par rétreinte. Selon cette technique de montage par rétreinte, une bague en matière métallique de diamètre externe légèrement supérieur à un diamètre de l'alésage est refroidie par immersion dans l'azote liquide, de manière à provoquer sa rétreinte et à permettre son insertion dans l'alésage. Une fois cette insertion réalisée, la bague en se réchauffant jusqu'à la température ambiante se dilate en retour vers sa conformation initiale, et se trouve alors solidement bloquée à l'intérieur de l'alésage dont le diamètre est inférieur à son diamètre externe. Une telle technique de montage présente notamment l'avantage de ne pas exercer de contraintes sur la bague ou sur la pièce support.

Un tel montage dit serré d'une bague dans un alésage formé dans une pièce support est fréquemment mis en oeuvre dans de nombreux domaines dans lesquels sont réalisés des assemblages mécaniques. Les bagues (ou frettes) y constituent généralement des pièces d'usure. A ce titre, elles doivent être régulièrement remplacées.

Selon les procédés proposés par l'art antérieur, les bagues à remplacer sont retirées des alésages, dans lesquels elles sont fermement ajustées, soit par usinage, soit par affaiblissement de la bague par des coups portés sur elle. Dans les deux cas, l'alésage est dégradé lors de cette opération. La solution préconisée en conséquence est alors d'effectuer un usinage de l'alésage, selon une côte de réparation, avant d'utiliser pour le remplacement de la bague usagée une nouvelle bague de diamètre externe supérieur à celui de la précédente. Cependant, en fonction de l'environnement et du contexte, l'opération d'usinage de l'alésage ne peut pas toujours être réalisée lorsque la pièce support est comprise dans un assemblage de pièces plus global. Il est dans ces cas nécessaire de démonter un sous-ensemble qui la contient, pour pouvoir procéder à l'usinage de l'alésage par une machine-outil en atelier. En outre, cette solution est limitée à un nombre de mises en oeuvre réduit, puisqu'il n'existe généralement que trois côtes de réparation pour une même pièce support.

La présente invention vise à remédier aux inconvénients des solutions de démontage des bagues montées serrées dans un alésage existantes, notamment à ceux exposés ci-avant, en proposant un procédé qui assure le démontage de la bague sans engendrer de détérioration de la pièce support et en particulier de la surface de l'alésage.

A cet effet, selon l'invention, un procédé de démontage d'une bague fermement ajustée dans un alésage formé dans une pièce support se caractérise en ce qu'on introduit dans la bague un organe de contour externe sensiblement complémentaire d'un contour interne de la bague et préalablement refroidi à une température suffisamment basse pour provoquer la rétreinte de la bague à sa proximité et, après un temps suffisant pour assurer une rétreinte de la bague, on extrait la bague hors de l'alésage.

On entend ici par contour sensiblement complémentaire le fait que l'organe présente, à la température ambiante, c'est-à-dire avant son refroidissement, une forme et des dimensions telles qu'il est apte à être inséré à l'intérieur de la bague, et que dans cette position il se trouve au plus près, par sa paroi périphérique externe, d'une paroi périphérique interne de la bague.

Ainsi, dans des modes de réalisation les plus courants dans lesquels la bague présente un contour interne sensiblement cylindrique, l'organe présente également un contour externe de forme sensiblement cylindrique, et un diamètre externe inférieur ou au plus égal à un diamètre interne de la bague, à une tolérance de montage en jeu glissant près.

Le procédé selon l'invention se base avantageusement sur la capacité de rétractation de la bague à des basses températures, nettement inférieures à 0 °C. La mise en présence, à très proche distance, de la bague avec l'organe froid qui a été introduit en son intérieur provoque la rétreinte de la bague, et par conséquent la diminution des forces de frottement s'exerçant entre la bague et l'alésage. La bague peut alors être extraite facilement hors de l'alésage, sans entraîner de détérioration de ce dernier.

Cette opération est avantageusement facile et rapide à réaliser. L'alésage n'ayant pas subi d'impact et ne portant pas de marques consécutives au démontage, il n'est plus besoin de le ré-usiner, et une bague de rechange de mêmes dimensions que la bague usagée qui a été ôtée peut être utilisée. Le coût global impliqué par le remplacement de la bague est par conséquent avantageusement réduit. La durée de vie de la pièce support est augmentée.

Dans des modes de mise en oeuvre préférés de l'invention, l'organe est refroidi préalablement à son introduction dans la bague par immersion dans de l'azote liquide. La température très basse de l'azote liquide, qui est de l'ordre de -196 °C, permet avantageusement d'obtenir un refroidissement rapide de l'organe, et jusqu'à une température suffisamment basse pour provoquer ensuite la rétreinte de la bague à sa proximité.

De préférence, on réalise simultanément l'extraction de la bague et de l'organe hors de l'alésage, et ce très rapidement dès que la bague a subi une rétreinte suffisante pour permettre son extraction hors de l'alésage.

Suivant une caractéristique avantageuse de l'invention, l'extraction de la bague hors de l'alésage est de préférence réalisée par traction, selon un axe longitudinal de la bague, d'un élément de butée qui a été placé dans l'alésage, en appui contre un bord longitudinal de la bague interne à l'alésage, préalablement à l'introduction de l'organe à l'intérieur de la bague.

Préférentiellement, simultanément à l'introduction de l'organe dans la bague, on chauffe la pièce support autour de l'alésage, si bien qu'il est assuré une différence de température importante entre cette pièce et la bague. La pièce support est ainsi avantageusement mieux protégée d'un refroidissement dû à la diffusion de froid de la bague vers elle, et elle est peu impactée par ce refroidissement.

L'invention sera maintenant plus précisément décrite dans le cadre de modes de réalisation préférés, qui n'en sont nullement limitatifs, représentés sur les figures 1 à 3, dans lesquelles :
- la figure 1 représente une bague à laquelle s'applique l'invention montée fermement ajustée dans un alésage d'une pièce support, en vue en coupe selon un plan longitudinal ;
- la figure 2 illustre un dispositif de démontage selon l'invention ;
- et la figure 3 montre, en coupe selon un plan longitudinal, le dispositif de la figure 2 positionné par rapport à la bague et à la pièce support de la figure 1, en vue de l'extraction de la bague hors de l'alésage.

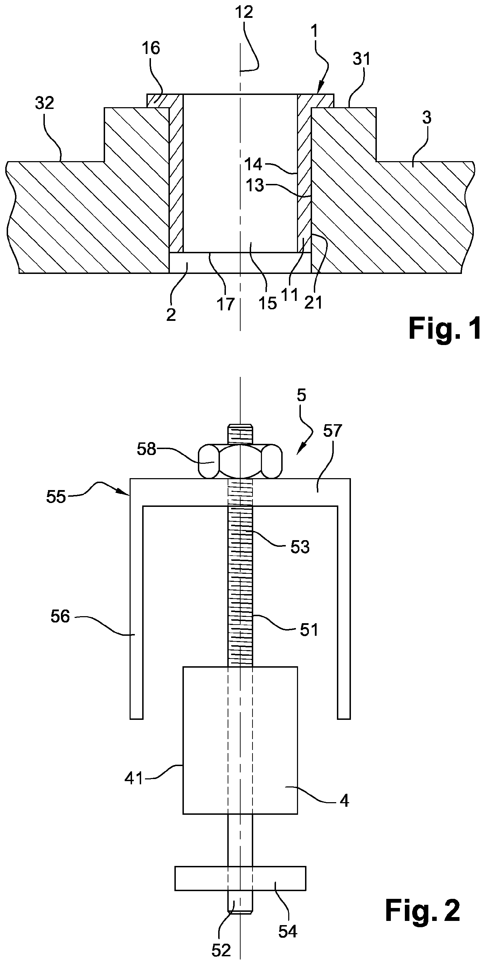

Une bague 1 à laquelle s'applique la présente invention est représentée sur la figure 1 dans sa position montée fermement ajustée dans un alésage 2 formé dans une pièce support 3.

La bague 1 comporte, de façon classique en elle-même, un corps principal 11 par exemple de forme sensiblement cylindrique autour d'un axe de révolution longitudinal 12, présentant un diamètre externe et un diamètre interne déterminés, une face périphérique externe 13 et une face interne opposée 14 délimitant une ouverture interne 15 de la bague. Elle comporte également une collerette annulaire supérieure 16, de diamètre externe supérieur au diamètre externe du corps 11.

De façon classique, la bague est formée en une matière métallique.

La pièce support 3 comporte une face dite externe 31, contre laquelle la collerette 16 est appliquée dans la position de montage de la bague.

L'alésage 2 présente une forme sensiblement complémentaire de la forme externe du corps 11 de la bague, par exemple sensiblement cylindrique, de même axe longitudinal que la bague 1. Son diamètre est sensiblement égal au diamètre externe du corps 11 de la bague, si bien que cette dernière est en appui, par sa face périphérique externe 13, contre la paroi périphérique 21 de l'alésage.

Dans la position de montage dans l'alésage, un bord longitudinal inférieur 17 de la bague, opposé à la collerette 16 en appui contre la face externe 31 de la pièce support 3, est disposé à l'intérieur de l'alésage 2.

La pièce support 3 peut en outre comporter, de façon périphérique par rapport à l'alésage 2, une rainure annulaire 32.

Dans le domaine auquel s'applique l'invention, la bague 1 a été montée dans l'alésage 2 par un procédé dit par rétreinte, qui est classique en lui-même et qui consiste à choisir une bague dont le corps présente un diamètre externe légèrement supérieur au diamètre de l'alésage, à refroidir cette bague à une température suffisamment basse pour assurer sa rétreinte, de manière à provoquer la diminution temporaire de son diamètre externe. La bague est ensuite introduite dans l'alésage dans cette configuration thermo-rétractée, puis laissée revenir à la température ambiante. Ce réchauffement entrainant l'expansion de la bague vers sa conformation initiale, la bague se retrouve alors fermement bloquée à l'intérieur de l'alésage, en appui par sa face périphérique externe 13 contre la paroi périphérique 21 de l'alésage.

Le procédé selon l'invention utilise avantageusement ce même principe de la rétreinte thermique pour assurer le démontage de la bague depuis cette position fermement ajustée dans l'alésage.

Il met à cet effet en oeuvre un dispositif de démontage comportant un organe 4 et un outillage d'extraction 5, dont un exemple de réalisation est représenté sur la figure 2.

L'organe 4 présente un contour externe sensiblement complémentaire du contour de l'ouverture interne 15 de la bague, c'est-à-dire, dans le mode de réalisation préféré représenté sur les figures, une forme sensiblement cylindrique. Son diamètre externe est choisi pour être inférieur au diamètre interne du corps 11 de la bague 1, de préférence sensiblement égal, à un jeu de montage glissant près. Il est délimité extérieurement par une paroi périphérique 41.

L'organe 4 est formé en un matériau résistant aux basses températures, de préférence en un matériau métallique. Il est de préférence plein, de manière à présenter une forte inertie thermique.

Il est en outre percé, de préférence sensiblement en son centre, d'un orifice longitudinal traversant.

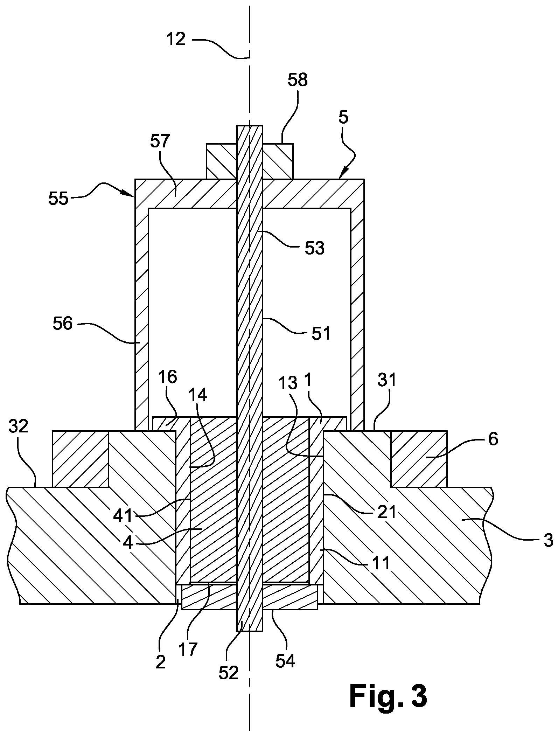

L'outillage d'extraction 5 est classique en lui-même. Dans un exemple de réalisation faisant l'objet des figures 2 et 3, qui n'est en aucun cas limitatif de l'invention, il est du type des arrache-moyeux, et il comporte une tige 51, également appelée tirant, de dimensions telles qu'elle est apte à être insérée à travers l'orifice traversant ménagé dans l'organe 4.

L'outillage comporte également un élément dit de butée 54, par exemple un disque, qui est monté fixe sur la tige 51 à une partie d'extrémité dite inférieure 52 de cette dernière, et de manière à s'étendre dans un plan sensiblement perpendiculaire à l'axe de la tige, sensiblement symétriquement par rapport à cet axe. Ce disque de butée 54 présente un diamètre externe supérieur au diamètre interne du corps 11 de la bague, et inférieur au diamètre de l'alésage 2.

Au niveau d'une partie supérieure dite opposée 53, la tige 51 est filetée.

L'outillage 5 comporte également des moyens 55 d'appui sur la pièce support, par exemple en forme d'un U renversé, présentant un bras supérieur 57 et deux branches sensiblement parallèles 56 s'étendant depuis des extrémités opposées de ce bras. Dans le bras 57, sensiblement en son centre, il est ménagé un orifice traversant sensiblement parallèle aux branches 56, et de diamètre tel qu'il est apte à recevoir la tige 51.

L'ensemble est complété par un écrou 58 apte à s'engager autour de la partie supérieure 53 de la tige 51, de sorte à venir en prise avec son filetage, comme illustré sur la figure 2.

Le procédé de démontage de la bague 1 montée serrée dans l'alésage 2 selon l'invention est maintenant décrit ci-après, en référence notamment à la figure 3.

La tige 51 est insérée par sa partie inférieure 52 dans l'ouverture 15 de la bague 1, depuis la face externe 31 de la pièce support, de sorte à positionner le disque de butée 54 à l'intérieur de l'alésage, sous le corps 11 de la bague. Ceci peut être réalisé en utilisant par exemple un disque 54 articulé en basculement par rapport à la tige 51, ou de toute autre manière connue de l'homme du métier. Une fois dans cette position, le disque 54 est amené en appui contre le bord longitudinal inférieur 17 de la bague.

Dans cette position, la tige 51 est disposée sensiblement centrée le long de l'axe longitudinal 12 de la bague.

L'organe 4 est refroidi à une température basse, de préférence négative, notamment par immersion dans l'azote liquide, de manière à l'amener à une température suffisamment froide pour provoquer ensuite la rétreinte de la bague à sa proximité. Cette température est par exemple égale à -196 °C.

L'organe 4 est alors rapidement extrait du bain d'azote et introduit à l'intérieur de la bague, en le faisant coulisser le long de la tige 51, autour de cette dernière. On observe que sa température chute rapidement à une valeur d'environ -50 °C.

L'organe 4 refroidi ayant lui-même subi une rétreinte, une fois à l'intérieur de la bague, il ne vient pas en contact par toute sa paroi périphérique externe 41 avec la face interne 14 du corps 11 de la bague, mais il s'en trouve suffisamment proche pour qu'il se produise une diffusion thermique de l'organe 4 vers le corps de la bague 1.

Dans le même temps, les moyens d'appui 55 sont installés autour de la partie supérieure 53 de la tige 51, les branches 56 étant disposées entre le bras supérieur 57 et la pièce support 3. L'écrou 58 est enfilé autour de la tige 51, au-dessus du bras 57. Il est de préférence réalisé une lubrification de la surface de contact entre l'écrou 58 et la tige filetée 51.

Dans un mode de réalisation préféré de l'invention, le dispositif d'extraction comporte en outre un élément chauffant, par exemple sous forme d'un anneau 6, destiné à chauffer la pièce support 3 autour de l'alésage 2, et qui est illustré sur la figure 3. L'anneau 6 présente un diamètre interne supérieur au diamètre de l'alésage. Pour fournir sa meilleure efficacité, il est de préférence disposé dans la rainure 32 formée sur la pièce support, de sorte à chauffer cette dernière dans son épaisseur tout autour de l'alésage 2.

Cet élément chauffant est classique en lui-même. Il peut par exemple être équipé d'un système de chauffage continu, ou bien avoir été préchauffé à une température adéquate, par exemple de 150 °C, préalablement à son installation sur la pièce support.

Cet anneau 6 permet avantageusement de réchauffer la pièce support autour de l'alésage, de manière à ce que celle-ci ne subisse pas de refroidissement important par contact avec la bague 1 elle-même refroidie par l'organe 4.

Sous l'effet du transfert thermique se produisant depuis l'organe 4, le corps 11 de la bague 1 se rétreint et son diamètre externe diminue. Ce faisant, sa face périphérique externe 13 se décolle légèrement de la paroi 21 de l'alésage.

L'ensemble est laissé dans cette configuration durant un temps prédéterminé, qui est à la fois suffisamment long pour assurer une rétreinte suffisante de la bague 1 pour permettre son extraction en douceur hors de l'alésage, et en même temps suffisamment court pour ne pas laisser le froid se diffuser jusqu'à la pièce support 3 autour de l'alésage.

Ce temps a été par exemple prédéterminé de manière expérimentale, par des essais préalables, et est notamment fonction des diamètres et des épaisseurs d'une part de la bague et d'autre part de l'organe. Ce temps est généralement inférieur à 1 minute.

L'écrou 58 est alors vissé le long de la tige 51 en direction de la partie d'extrémité inférieure opposée 52 de cette dernière, jusqu'à ce que d'une part les branches 56 viennent en appui, par leur extrémité opposée au bras 57, contre la face externe 31 de la pièce support 3, autour de la collerette 16 de la bague, et d'autre part le disque 54 vienne en butée contre le bord longitudinal inférieur 17 de la bague, comme illustré sur la figure 3.

Lorsque ce mouvement de vissage de l'écrou 58 est alors poursuivi, il se produit un effet de traction du disque 54 en direction du bras 57 de l'outil, selon l'axe longitudinal 12, qui réalise l'extraction de la bague 1, entraînée par le disque 54, hors de l'alésage 2. Cette opération s'effectue sans aucune détérioration ou marquage de l'alésage 2, qui reste de ce fait intact et directement prêt à recevoir une bague de remplacement de la précédente, de mêmes dimensions que celle-ci.

L'ensemble de ces opérations est avantageusement rapide à effectuer. Le temps total pour l'extraction de la bague peut notamment être aussi court que 30 minutes.

Si l'opération d'extraction ne peut pas être réalisée dans les délais appropriés, et qu'une extraction en douceur de la bague n'est de ce fait pas possible, l'outillage est démonté. De part ses dimensions extérieures telles que définies conformément à la présente invention, l'organe peut être retiré de la bague même lorsque l'ensemble est revenu à la température ambiante. L'opération de démontage peut ensuite être réitérée.

La description ci-avant illustre clairement que par ses différentes caractéristiques et leurs avantages, la présente invention atteint les objectifs qu'elle s'était fixés. En particulier, elle propose un procédé et un dispositif pour le démontage d'une bague montée fermement ajustée dans un alésage, qui permettent de réaliser le démontage facilement et rapidement, pour un coût réduit, tout en assurant que la surface de l'alésage et la pièce support dans son ensemble ne soient pas endommagés. Ce procédé peut en outre être mis en oeuvre de façon commode en tout lieu, et dans toute position et configuration de la pièce support, sans qu'il soit nécessaire de séparer cette dernière d'un ensemble de pièces plus global qui la contient.

L'invention ne se limite cependant pas aux modes de réalisation décrits à titre d'exemple et représentés sur les figures. En particulier, tout autre type d'outillage d'extraction de la bague rétreinte hors de l'alésage connu de l'homme du métier entre dans le cadre de l'invention, dans la mesure où il assure qu'aucun dommage ne soit créé au niveau de la pièce support lors de l'extraction, et où il peut être mis en oeuvre suffisamment rapidement pour réaliser l'extraction avant que la bague ne se dilate à nouveau en se réchauffant.

## Revendications

1. Procédé de démontage d'une bague (1) fermement ajustée dans un alésage (2) formé dans une pièce support (3), **caractérisé en ce qu'**on introduit dans ladite bague un organe (4) de contour externe sensiblement complémentaire d'un contour interne de la bague et préalablement refroidi à une température suffisamment basse pour provoquer la rétreinte de ladite bague à sa proximité et, après un temps suffisant pour assurer une rétreinte de ladite bague, on extrait la bague (1) hors de l'alésage (2).

2. Procédé selon la revendication 1, **caractérisé en ce que** l'organe (4) est refroidi préalablement à son introduction dans la bague (1) par immersion dans l'azote liquide.

3. Procédé selon la revendication 1 ou 2, **caractérisé en ce qu'**on réalise simultanément l'extraction de la bague (1) et de l'organe (4) hors de l'alésage.

4. Procédé selon l'une quelconque des revendications 1 à 3, **caractérisé en ce que** l'extraction de la bague (1) hors de l'alésage (2) est réalisée par traction, selon un axe longitudinal (12) de la bague (1), d'un élément de butée (54) placé dans ledit alésage en appui contre un bord longitudinal (17) de la bague interne audit alésage (2) préalablement à l'introduction de l'organe (4) dans la bague.

5. Procédé selon l'une quelconque des revendications 1 à 4, **caractérisé en ce que** simultanément à l'introduction de l'organe (4) dans la bague (1), on chauffe ladite pièce support (3) autour de l'alésage (2).

## Patentansprüche

1. Verfahren zum Demontieren eines Rings (1), der in eine in einem Trägerteil (3) ausgebildete Bohrung (2) eng eingesetzt ist, **dadurch gekennzeichnet, dass** in den Ring ein Organ (4) eingesetzt wird, dessen äußerer Umriss zu einem inneren Umriss des Rings im Wesentlichen komplementär ist und das vorher auf eine ausreichend niedrige Temperatur abgekühlt worden ist, um in seiner Umgebung das Zusammenziehen des Rings hervorzurufen, und nach einer Zeit, die ausreicht, um ein Zusammenziehen des Rings sicherzustellen, der Ring (1) aus der Bohrung (2) herausgezogen wird.

2. Verfahren nach Anspruch 1, **dadurch gekennzeichnet, dass** das Organ (4) vor seinem Einsetzen in den Ring (1) durch Eintauchen in flüssigen Stickstoff abgekühlt wird.

3. Verfahren nach Anspruch 1 oder 2, **dadurch gekennzeichnet, dass** das Herausziehen des Rings (1) und des Organs (4) aus der Bohrung gleichzeitig erfolgt.

4. Verfahren nach einem der Ansprüche 1 bis 3, **dadurch gekennzeichnet, dass** das Herausziehen des Rings (1) aus der Bohrung (2) durch Ziehen eines Anschlagelements (54), das vor dem Einsetzen des Organs (4) in den Ring in der Bohrung anliegend an einem longitudinalen Rand (17) des Rings in der Bohrung (2) angeordnet wird, in Richtung einer Längsachse (12) des Rings (1) erfolgt.

5. Verfahren nach einem der Ansprüche 1 bis 4, **dadurch gekennzeichnet, dass** gleichzeitig mit dem Einsetzen des Organs (4) in den Ring (1) das Trägerteil (3) um die Bohrung (2) erwärmt wird.

## Claims

1. Method for demounting a ring (1) which is firmly fitted in a bore (2) formed in a support part (3), **characterized in that** there is inserted into said ring a member (4) with an external contour substantially complementary to an internal contour of the ring and cooled beforehand to a sufficiently low temperature to cause the contraction of said ring in its vicinity and, after a sufficient time to ensure a contraction of said ring, the ring (1) is extracted from the bore (2).

2. Method according to Claim 1, **characterized in that** the member (4) is cooled prior to its insertion into the ring (1) by immersion in liquid nitrogen.

3. Method according to Claim 1 or 2, **characterized in that** the ring (1) and the member (4) are extracted from the bore simultaneously.

4. Method according to any one of Claims 1 to 3, **characterized in that** the ring (1) is extracted from the bore (2) by pulling, along a longitudinal axis (12) of the ring (1), an abutment element (54) placed in said bore so as to bear against a longitudinal edge (17) of the ring inside said bore (2) prior to inserting the member (4) into the ring.

5. Method according to any one of Claims 1 to 4, **characterized in that** said support part (3) is heated around the bore (2) simultaneously to the member (4) being inserted into the ring (1).
